# EUROPÄISCHE PATENTSCHRIFT

(11) **EP 0 572 709 B1**
(45) Veröffentlichungstag und Bekanntmachung des Hinweises auf die Patenterteilung: **27.09.1995**
(21) Anmeldenummer: 92112664.5
(22) Anmeldetag: 24.07.1992
(51) Int. Cl.: B60J 7/12

(54) **Cabrio-Verdeck**
Convertible top
Toit pour véhicule décapotable

(30) Priorität: 05.06.1992 DE 4218607
(43) Veröffentlichungstag der Anmeldung: 08.12.1993
(73) Patentinhaber: Gebr. Happich GmbH, D-42097 Wuppertal (DE)
(72) Erfinder: Cziptschirsch, Kurt, W-5600 Wuppertal 12 (DE)

(56) Entgegenhaltungen:
- EP-A- 0 356 639
- US-A- 2 418 918
- US-A- 2 708 137
- US-A- 3 319 995

## Beschreibung

Die Erfindung bezieht sich auf ein Cabrio-Verdeck mit einem unterhalb eines Verdeckstoffs anordbaren Himmel.

Bei einem Verdeck der durch die DE-A-2 607 374 bekanntgewordenen Art, ist eine Dachinnenverkleidung vorgesehen, die zur Verbindung mit Spriegeln mit Schlaufen ausgerüstet ist. Die Schlaufen bestehen aus einem dicken, nachgiebigem Material, wie z. B. Polyestervlies, das in Streifenform geschnitten und durch Schweißen oder Nähen so mit der Innenverkleidung verbunden ist, daß ein Schlauch entsteht, in den ein Spriegel eingeschoben wird. Diese Ausbildung des Himmels (Dachverkleidung) ist im Hinblick auf die aufwendige Herstellung und Montage äußerst unbefriedigend.

Aus der US-A-2 418 918 ist ein Cabrio-Verdeck mit einem unterhalb eines Verdeckstoffs anordbaren Himmel bekanntgeworden, der in Querrichtung des Himmels, auf dessen Oberseite Verbindungselemente zum Festlegen des Himmels am Verdeckstoff und an Spriegeln aufweist.

Der vorliegenden Erfindung liegt nun die Aufgabe zugrunde, die Herstellung und insbesondere die Montage und Demontage des Himmels zu vereinfachen und darüber hinaus Vorsorge dafür zu treffen, daß der Himmel Schallschluck- sowie Wärme- und Kälteisolations-Eigenschaften aufweist. Ferner soll sich der Himmel dadurch auszeichnen, daß er auch bei rascher Fahrt sauber am Rand des Cabrio-Verdecks anliegt und sich nicht abhebt.

Zur Lösung dieser Aufgabe ist erfindungsgemäß vorgesehen, daß der Himmel aus einem textilen Abstandsgewirke mit zwei außenliegenden Gewirkebahnen und einer dazwischenliegenden Abstandsstruktur besteht, die aus bahnflächenverbindenden Maschen mit monofilen elastischen Fäden, die abwechselnd mit je einer der Gewirkebahnen vermascht sind, gebildet ist, daß die Längsränder des Abstandsgewirkes mit integrierten Kanälen ohne dazwischenliegender Abstandsstruktur zur Aufnahme von Längsspannelementen für den Himmel ausgebildet sind und daß in Querrichtung des Himmels auf der Himmeloberseite Verbindungselemente angeordnet sind, über die der Himmel an Spriegeln durch Klipsmontage festlegbar ist.

Der erfindungsgemäße Himmel zeichnet sich durch verschiedene Vorteile aus. Zunächst wird durch die Maßnahme, den Himmel als textiles Abstandsgewirke auszubilden, ein Feuchtigkeitsausgleich erreicht. Ferner wird durch diese Maßnahme eine Wärme- und Schallisolierung erreicht. Durch die Schallisolierung wird die Geräuschbelastung im Fahrgastraum wesentlich reduziert. Die integrierten Kanäle an den Längsrändern des Himmels ermöglichen ein Einziehen von Längsspannelementen, die einem Abheben des Himmels von den Seitenrändern des Cabrio-Verdecks auch bei rascher Fahrt entgegenwirken. Die am Himmel angeordneten Verbindungselemente ermöglichen eine Klipsmontage an den Spriegeln und damit eine wesentliche Montagevereinfachung. Aufgrund der erfindungsgemäßen Maßnahmen ist es nun möglich, einen Verdeck-Himmel als komplette Einbaueinheit anzuliefern, wobei sich der Himmel noch durch wesentlich verbesserte Gebrauchseigenschaften und ein ansprechendes Aussehen auszeichnet.

In Ausgestaltung der Erfindung kann vorgesehen sein, daß die Verbindungselemente mit dem textilen Abstandsgewirke verschweißt sind. Diese Maßnahme trägt wesentlich zur Vereinfachung der Herstellung bei.

Gemäß einer weiteren Ausgestaltung der Erfindung, sind die Verbindungselemente C-förmig ausgebildet und weisen jeweils einen längs durchlaufenden Schlitz zur Klipsmontage an den Spriegeln auf. Die Verbindungselemente sind einfach und preiswert herzustellen und können beispielsweise aus extrudierten Kunststoffkörpern bestehen.

Die Verbindungselemente können unmittelbar am Himmel angeordnet sein. Es ist aber gemäß einer Weiterbildung der Erfindung auch möglich, daß die Verbindungselemente über Zwischenglieder mit dem textilen Abstandsgewirke verbunden sind, was die Flexibilität erhöht. Dabei sind die Zwischenglieder vorzugsweise jeweils mit dem textilen Abstandsgewirke verschweißt und mit den Verbindungselementen verklipst.

Gemäß einer Weiterbildung der Erfindung besteht das textile Abstandsgewirke aus einem schweißfähigen, insbesondere hochfrequenzschweißfähigem Material. Hierdurch ergibt sich die vereinfachte Möglichkeit zur Bildung der Längskanäle, indem die Kanäle durch die Gewirkebahnen miteinander verbindende Längsschweißnähte gebildet sind.

Die Schweißfähigkeit kann auch dadurch erreicht werden, daß der Himmel mit Querkanälen zur Aufnahme von Schweißhilfsmitteln ausgebildet ist.

Die Erfindung kann schließlich noch dadurch vervollkommnet werden, daß der Himmel einen Ausschnitt mit einer darin eingesetzten Heckscheibe aufweist.

Die Erfindung wird nachfolgend anhand der Zeichnung, die ein Ausführungsbeispiel zeigt, näher erläutert.

Es zeigen:
- Fig. 1: einen fertig konfektionierten Himmel in Draufsicht,
- Fig. 2: einen Schnitt, folgend der Linie II - II in Fig. 1,
- Fig. 3: einen Schnitt, folgend der Linie III - III in Fig. 1,
- Fig. 4: eine gegenüber Fig. 3 abgewandelte Ausführungsform
und
- Fig. 5: eine weitere, gegenüber Fig. 3 abgewandelte Ausführungsform.

Der Cabrio-Verdeck-Himmel 1 besteht aus einem textilen Abstandsgewirke mit den parallelen Gewirkebahnen 2 und 3 und einer dazwischen liegenden Abstandsstruktur 4. Die nicht näher dargestellte Abstandsstruktur 4 besteht z. B. aus bahnflächenverbindenden Maschen mit monofilen elastischen Fäden, die abwechselnd mit je einer der Gewirkebahnen 2, 3 vermascht sind. An den beiden Längsrändern des Himmels 1 sind Kanäle 5 ausgebildet, die zur Aufnahme von bandförmigen Längsspannelementen 6 dienen. Zur Bildung der Kanäle 5 kann wirktechnisch vorgegangen werden. Bevorzugt werden die Kanäle 5 aber durch Hochfrequenzschweißnähte 7 abgesetzt. Hierzu ist vorgesehen, daß das textile Abstandsgewirke zumindest bereichsweise schweißfähig ist, z. B. durch eingewirkte PVC-Fäden.

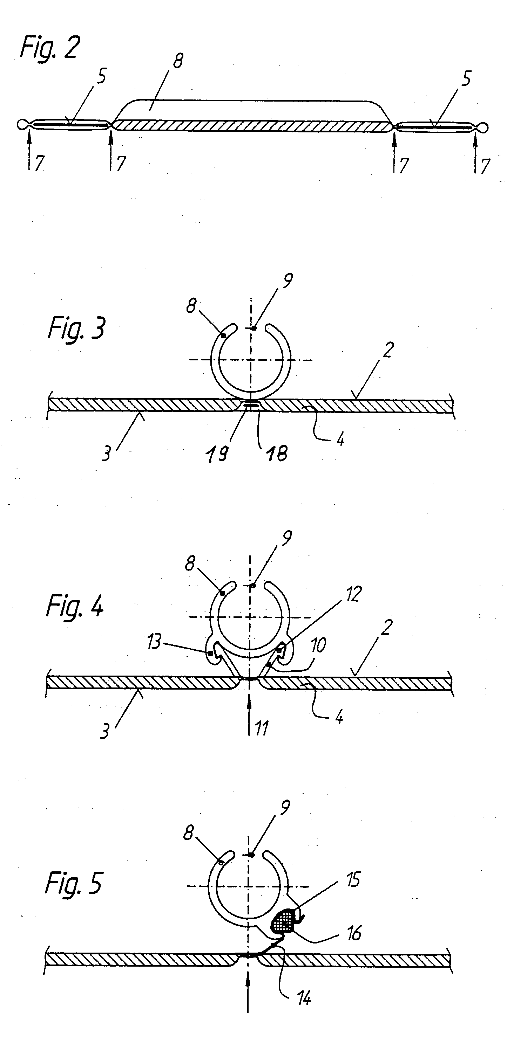

Auf der Himmeloberseite sind Verbindungselemente 8 angeordnet, über die der Himmel 1 an nicht dargestellten Spriegeln durch Klipsmontage festlegbar ist. Die Verbindungselemente 8 bestehen aus stranggepreßten Kunststoff-Körpern mit einer in Längsrichtung durchlaufenden Schlitzöffnung 9, die die Verbindungselemente 8 aufspreizbar macht. Die Verbindungselemente 8 können, wie in Fig. 3 gezeigt ist, unmittelbar mit dem Himmel 1 verbunden sein, wobei bevorzugt Hochfrequenzschweißen vorgesehen ist. Bei einem nicht hochfrequenzschweißfähigem Himmelmaterial können Querkanäle 18 im Himmel 1 ausgebildet sein, in die Hilfsschweißmittel 19, z. B. Kunststoffstreifen einzuschieben sind.

Beim Beispiel nach Fig. 4 sind die Verbindungselemente 8 jeweils über Zwischenglieder 10 am Himmel 1 festgelegt. Dabei bestehen die Zwischenglieder 10 aus einem extrudierten Kunststoffstreifen aus schweißfähigem Material, so daß eine Schweißverbindung (Pfeil 11) mit dem Himmel 1 herstellbar ist. Die Zwischenglieder 10 nach Fig. 4 verfügen über Rastnasen 12 und die Verbindungselemente 8 nach Fig. 4 über Rastaufnahmen, 13, so daß eine Klipsverrastung ermöglicht wird.

Beim Ausführungsbeispiel nach Fig. 5 dient eine am Himmel befestigte, bevorzugt angeschweißte Lasche 14 als Zwischenglied zur Festlegung des Verbindungselements 8 am Himmel 1. Am Verbindungsglied 8 ist eine längs durchlaufende, hinterschnitten ausgebildete Aufnahme 15 ausgebildet, in die unter Einschluß der Lasche 14 ein Füllerprofil 16 eingedrückt ist.

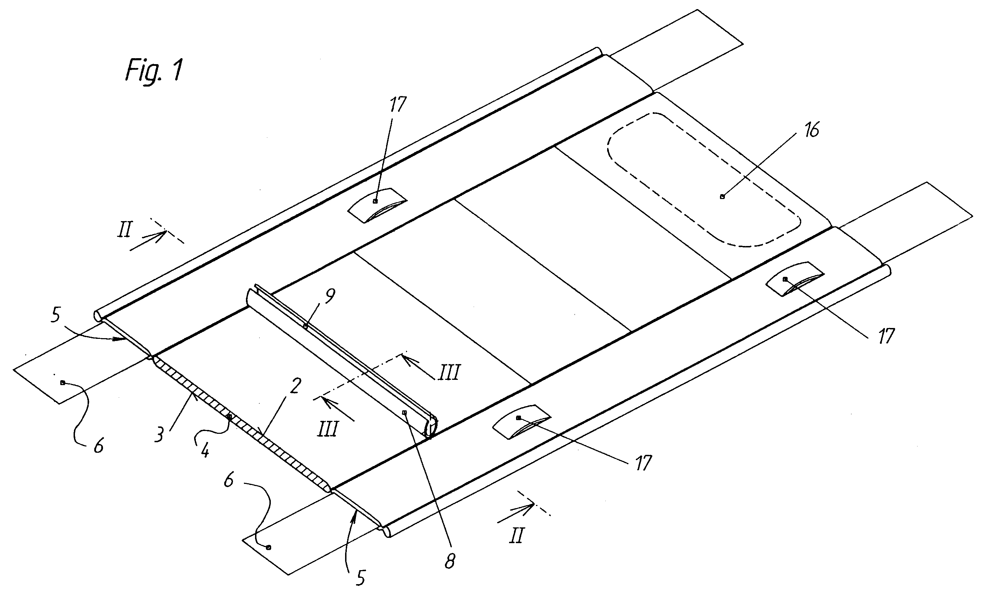

In Fig. 1 ist mit gestrichelten Linien eine in eine Himmelöffnung einsetzbare Heckscheibe 16 angedeutet. Ferner ist in Fig. 1 angedeutet, daß im Bereich der Längsränder des Himmels 1 Aufhängeösen 17 vorgesehen werden können.

## Patentansprüche

1. Cabrio-Verdeck mit einem unterhalb eines Verdeckstoffs anordbaren Himmel (1), der
- aus einem textilen Abstandsgewirke mit zwei außenliegenden Gewirkebahnen (2, 3) und einer dazwischenliegenden Abstandsstruktur (4) besteht,
- die Abstandsstruktur (4) aus bahnflächenverbindenden Maschen mit monofilen elastischen Fäden, die abwechselnd mit je einer der Gewirkebahnen (2, 3) vermascht sind, gebildet ist,
- die Längsränder des Abstandsgewirkes mit integrierten Kanälen (5) ohne dazwischenliegender Abstandsstruktur zur Aufnahme von Längsspannelementen (6) für den Himmel (1) ausgebildet sind und
- in Querrichtung des Himmels (1) auf der Himmeloberseite Verbindungselemente (8) angeordnet sind, über die der Himmel (1) an Spriegeln durch Klipsmontage festlegbar ist.

2. Cabrio-Verdeck nach Anspruch 1, dadurch gekennzeichnet, daß die Verbindungselemente (8) mit dem textilen Abstandsgewirke verschweißt sind.

3. Cabrio-Verdeck nach Anspruch 1 oder 2, dadurch gekennzeichnet, daß die Verbindungslemente (8) C-förmig ausgebildet sind und jeweils einen längs durchlaufenden Schlitz (9) zur Klipsmontage an den Spriegeln aufweisen.

4. Cabrio-Verdeck nach mindestens einem der Ansprüche 1 bis 3, dadurch gekennzeichnet, daß die Verbindungselemente (8) über Zwischenglieder (10,14) mit dem textilen Abstandsgewirke verbunden sind.

5. Cabrio-Verdeck nach Anspruch 4, dadurch gekennzeichnet, daß die Zwischenglieder (10,14) jeweils mit dem textilen Abstandsgewirke verschweißt und mit den Verbindungselementen (8) verklipst sind.

6. Cabrio-Verdeck nach wenigstens einem der Ansprüche 1 bis 5, dadurch gekennzeichnet, daß das textile Abstandsgewirke aus einem schweißfähigen, insbesondere hochfrequenzschweißfähigen Material besteht.

7. Cabrio-Verdeck nach mindestens einem der Ansprüche 1 bis 6, dadurch gekennzeichnet, daß die Kanäle (5) durch die Gewirkebahnen (2,3) miteinander verbindende Längsschweißnähte (7) gebildet sind.

8. Cabrio-Verdeck nach mindestens einem der Ansprüche 1 bis 7, dadurch gekennzeichnet, daß der Himmel (1) mit Querkanälen (18) zur Aufnahme von Schweißhilfsmitteln (19) ausgebildet ist.

9. Cabrio-Verdeck nach wenigstens einem der Ansprüche 1 bis 7, dadurch gekennzeichnet, daß der Himmel (1) einen Ausschnitt mit einer darin eingesetzten Heckscheibe (16) aufweist.

## Claims

1. Cabriolet folding top with a headliner (1) which can be arranged under a folding-top cloth and
- consists of a textile knitted spacing fabric with two outer knitted-fabric webs (2, 3) and a spacing structure (4) lying in between,
- the spacing structure (4) is formed from meshes connecting the web surfaces and having monofilament, elastic threads which are interlooped alternately with each of the knitted-fabric webs (2, 3),
- the longitudinal edges of the knitted spacing fabric are constructed with integrated channels (5) without a spacing structure lying in between, for receiving longitudinal clamping elements (6) for the headliner (1) and
- in the transverse direction of the headliner (1), on the upper side of the headliner, there are arranged connecting elements (8) via which the headliner (1) can be secured on struts by clip fitting.

2. Cabriolet folding top according to Claim 1, characterized in that the connecting elements (8) are welded to the textile knitted spacing fabric.

3. Cabriolet folding top according to Claim 1 or 2, characterized in that the connecting elements (8) are of C-shape design and in each case have a slot (9) running through longitudinally for the clip fitting on the struts.

4. Cabriolet folding top according to at least one of Claims 1 to 3, characterized in that the connecting elements (8) are connected to the textile knitted spacing fabric via intermediate members (10, 14).

5. Cabriolet folding top according to Claim 4, characterized in that the intermediate members (10, 14) are each welded to the textile knitted spacing fabric and are clipped to the connecting elements (8).

6. Cabriolet folding top according to at least one of Claims 1 to 5, characterized in that the textile knitted spacing fabric consists of a weldable, in particular high-frequency weldable material.

7. Cabriolet folding top according to at least one of Claims 1 to 6, characterized in that the channels (5) are formed by longitudinal welding seams (7) which connect the knitted-fabric webs (2, 3) to each other.

8. Cabriolet folding top according to at least one of Claims 1 to 7, characterized in that the headliner (1) is constructed with transverse channels (18) for receiving welding aids (19).

9. Cabriolet folding top according to at least one of Claims 1 to 7, characterized in that the headliner (1) has a cutout with a rear window (16) inserted therein.

## Revendications

1. Capote de cabriolet comportant un habillage de plafond (1) à placer sous une étoffe de capote, qui
- est constitué d'un tricot d'écartement textile avec deux bandes de tricot (2, 3) situées à l'extérieur et une structure d'écartement (4) intercalaire,
- la structure d'écartement (4) est formée de mailles reliant des surfaces de bande avec des fils élastiques à monobrin, qui sont alternativement liées aux mailles de l'une des bandes de tricot (2, 3),
- les bords longitudinaux du tricot d'écartement sont formés avec des canaux (5) intégrés sans structure d'écartement intercalaire, afin de loger des éléments de serrage longitudinaux (6) pour l'habillage (1) et
- dans la direction transversale de l'habillage (1), sur la face supérieure de celui-ci sont prévus des éléments de liaison (8) au moyen desquels l'habillage (1) peut être fixé par montage clipsé, sur des arceaux.

2. Capote de cabriolet selon la revendication 1, caractérisé en ce que les éléments de liaison (8) sont soudés avec le tricot d'écartement textile.

3. Capote de cabriolet selon les revendications 1 ou 2, caractérisé en ce que les éléments de liaison (8) sont en forme de C et présentent chacun une fente (9) continue sur leur longueur en vue du montage clipsé sur les arceaux.

4. Capote de cabriolet selon l'une au moins des revendications 1 à 3, caractérisé en ce que les éléments de liaison (8) sont reliés au tricot d'écartement textile, par des organes intermédiaires (10, 14).

5. Capote de cabriolet selon la revendication 4, caractérisé en ce que les organes intermédiaires (10, 14) sont soudés chacun avec le tricot d'écartement textile et clipsés avec les éléments de liaison (8).

6. Capote de cabriolet selon l'une au moins des revendications 1 à 5, caractérisé en ce que le tricot d'écartement textile est réalisé dans une matière pouvant être soudée, en particulier soudée aux hautes fréquences.

7. Capote de cabriolet selon l'une au moins des revendications 1 à 6, caractérisé en ce que les canaux (5) sont formés par des cordons de soudure longitudinaux (7) reliant entre elles les bandes de tricot (2, 3).

8. Capote de cabriolet selon l'une au moins des revendications 1 à 7, caractérisé en ce que l'habillage de plafond (1) comporte des canaux transversaux (18) destinés à loger des moyens auxiliaires de soudage (19).

9. Capote de cabriolet selon l'une au moins des revendications 1 à 7, caractérisé en ce que l'habillage de plafond (1) présente une découpe avec une vitre arrière (16) placée à l'intérieur de celle-ci.
